# EUROPEAN PATENT SPECIFICATION

(11) **EP 0 420 283 B1**
(45) Date of publication and mention of the grant of the patent: **29.03.1995**
(21) Application number: 90118737.7
(22) Date of filing: 28.09.1990
(51) Int. Cl.: B65G 67/60, B63B 27/22

(54) **Apparatus and procedure for the loading of parcelled goods**
Vorrichtung und Verfahren zum Laden von Stückgütern
Dispositif et méthode pour charger des articles

(30) Priority: 28.09.1989 FI 894594
(43) Date of publication of application: 03.04.1991
(73) Proprietor: KCI-KONE CRANES INTERNATIONAL OY, SF-5830 Hyvinkää (FI)
(72) Inventor: Tasanen, Lauri, SF-05800 Hyvinkää (FI); Niemi, Jarmo, SF-05880 Hyvinkää (FI)
(74) Representative: Zipse + Habersack

(56) References cited:
- EP-A- 0 317 788
- CH-A- 648 806
- DE-A- 1 946 195
- DE-A- 2 212 229
- GB-A- 1 152 559
- US-A- 4 828 102

## Description

The present invention relates to an apparatus as defined in the introductory part of claim 1 and a procedure as defined in the introductory part of claim 3 for the loading of parcelled goods.

In current practice, when bags are loaded in a ship, vertical conveyors are used to bring them down into a hold where a horizontal conveyor, generally a telescopic conveyor, brings them close to the place where they are to be stacked. Here the bags are received by workers who lift them up, turn them to the required position and stack them one on top of the other and side by side in the hold.

However, the current methods involve many drawbacks. They require a large number of human workers, and the work is very hard and must be done in a fast tempo. The work requires continuous control of the conveyors, but nevertheless the bags must be moved and handled manually to orientate them correctly. The order of loading of the bags cannot be preprogrammed. Instead, the bags are placed in an indefinite order in each hold. Moreover, the loading capacity is limited due to the large number of workers required.

DE-A-1 946 195 discloses an apparatus and procedure for automatically loading parcelled goods, comprising horizontal conveyors which are horizontally rotatable and provided with a stowing or stacking device. Programming means ensure that the loading proceeds according to a certain loading scheme. But, the horizontal conveyors rotatably connected to each other are not suitable for the loading of a cargo hold in a ship because their radius of action is limeted to certain pivotal movements, especially when the orientation of the goods is to be kept constant.

The object of the present invention is to eliminate the drawbacks referred to above. A specific object of the invention is to produce a new type of apparatus and procedure for the loading of parcelled goods, enabling the dangerous and hard portions of the loading work to be automated and the loading capacity to be heightened.

As for the features characteristic of the invention, reference is made to the claims.

The apparatus of the invention for the loading of parcelled goods in the cargo hold of a ship comprises a vertical conveyor for moving the goods in the downward direction and, placed at the lower end of the vertical conveyor, a horizontal conveyor for moving the goods in an essentially horizontal direction. The vertical conveyor may be a spiral conveyor in which the goods gravitate downwards along a spiral track, or some other type of conveyor, e.g. a belt or bucket conveyor. The horizontal conveyor at the lower end of the vertical conveyor is preferably an adjustable-length telescoping belt conveyor, although even other types of conveyor constructions can be used.

The apparatus of the invention comprises a horizontally turnable stowing device placed at the end of the horizontal conveyor pointing away from the vertical conveyor, said device being supported by the horizontal conveyor. In addition, the apparatus is provided with control equipment enabling the stowing device to be held in a constant orientation relative to the space to be loaded. In this way, the parcels arriving in a given position from the horizontal conveyor to the stowing device always have the same orientation when delivered from the stowing device into the hold, so they need not be turned during stacking.

Either the horizontal conveyor or the stowing device or preferably both are provided with suitable guiding devices, e.g. vertical or horizontal guide plates, ensuring that the parcels are held in a certain orientation as they move from the horizontal conveyor to the stowing device.

In an embodiment of the invention, the stowing device consists of a stacking device which receives the parcels from the horizontal conveyor and stacks (e.g. drops) them in a given place in the space to be loaded.

In another embodiment of the invention, the stowing device consists of an essentially horizontal auxiliary conveyor, e.g. a belt conveyor, which receives the parcels from the horizontal conveyor and which, by means of guiding devices, is kept in a certain direction relative to the space to be loaded during the whole loading operation. In this case, the parcels are taken manually from the auxiliary conveyor and stacked in the space to be loaded, but this is done considerably faster than in current methods because the parcels are already in the correct orientation on the auxiliary conveyor and they only have to be dropped in a controlled fashion in the desired stacking locations.

In a preferred embodiment of the invention, a stacking device is provided at the end of the horizontally turnable auxiliary convyeor mounted at the end of the horizontal conveyor, said stacking device consisting of a frame structure containing a feed space limited below by one or more, preferably two openable supporting devices so designed that, when a parcel oriented in a certain way arrives from the auxiliary conveyor into the feed space of the stacking device, they will open at a suitable stage, allowing the parcel to fall down from the feed space to the desired stacking location. In this manner, using the stacking device, the parcels can be placed in a controlled fashion, one at a time and in a given order, in the space to be loaded.

The stacking device may also consist of a different structure, depending on the nature of the goods to be loaded. Therefore, the supporting devices provided in the stacking device may also consist of suitable fixed guides or equivalent which support the parcel until it arrives at a given location, from where it falls, slides or is otherwise transferred to the desired place.

The feed space of the stacking device is preferably provided with a tripping device which opens the supporting devices to let the parcel fall down from the feed space. In a preferred embodiment of the invention, the tripping device consists of a lever mechanism provided at the rear of the feed space and so connected to the supporting devices that the parcel, having advanced far enough in the feed space, will hit the lever mechanism, causing the supporting devices to open.

To enable the supporting devices to return to the closed position after they have been opened, the stacking device is provided with counterweights connected to the supporting devices, causing the latter to turn up as soon as the weight of the parcel ceases to act on them. Naturally it is also possible to use e.g. springs or equivalent to return the supporting devices to the upper position.

In a preferred embodiment of the invention, the conveying and power means of the vertical and horizontal conveyors and of the stowing device as well as the location sensors used in conjunction with them are connected to suitable control equipment enabling the position of the stacking device to be accurately determined and controlled in accordance with the desired loading program. In this way, the stacking device can be brought exactly to the desired place in the space to be loaded, and the space can be tightly and accurately loaded.

In the procedure of the invention for the loading of parcelled goods, the parcels are lowered in succession into the space to be loaded by means of a vertical conveyor supported by a crane, and from the bottom end of the vertical conveyor they are moved in succession towards the stacking location by means of a horizontal conveyor. In the loading procedure of the invention, the loading involves the use of a stacking device which maintains a constant orientation relative to the space to be loaded and to which the parcels are supplied, and a loading scheme is defined before the loading is started, whereupon the stacking device is attached to the cooordinates of the space to be loaded and then moved in the space in accordance with the loading scheme.

The space to be loaded is preferably defined by driving the apparatus to the extreme and corner points of the space and feeding suitable signals into the control system, so that after registering these points the control system will be able to control the loading apparatus during the loading operation.

The space to be loaded can also be defined via manual drive by bringing the vertical conveyor into the space and moving it, together with the horizontal conveyor and stacking device supported by it, along the extremities of the space and thus teaching the loading apparatus the limits within which it is supposed to work. It is also possible to install detectors or equivalent devices in suitable places on the loading apparatus and/or in the space to be loaded to enable the apparatus to automatically recognize and measure the space.

The control of the apparatus, the definition of the space to be loaded and the preparation of the loading scheme are implemented using suitably programmed devices, processors, computers and equivalent known in themselves and applicable for the transfer and processing of data.

The loading scheme, which is made after the space to be loaded has been defined, is based on the idea that the loading can be performed with minimal movement of the vertical conveyor. Since the horizontal conveyor supported by the lower end of the vertical conveyor is turnable through 360° in the horizontal plane and, moreover, has an adjustable-length telescoping construction, it is possible to load even relatively large areas without moving the vertical conveyor.

As the parcels are piled by dropping them from the stacking device on top of each other to form adjacent piles, spaces that are several metres high cannot be loaded one pile at time, because the height of fall of the parcels would be too large. Therefore, the loading is preferably performed by forming layers of a suitable number of parcels, each layer comprising 1 - 10 parcels, preferably 1 - 6 parcels, suitably 2 - 4 parcels.

It has been found that a preferable procedure for the stacking of bags is one in which six-bag layers are produced by forming two half-layers of three bags on top of one another in such manner that, while the vertical conveyor is located in a certain place and the stacking device reaches a certain area in the space to be loaded, this area is filled with three-bag piles one pile at a time, whereupon another three-bag half-layer is similarly stacked on top of the first half-layer, so that a six-bag layer is formed in this area. After this, corresponding stacking operations are repeated in the rest of the space until the whole space has been filled with six-bag piles, whereupon a new round of similar stacking operations is started.

In a preferred embodiment of the invention, the transfer and location of the stacking device relative to the space to be loaded are performed by first measuring the motion of the crane supporting the vertical conveyor relative to the space to be loaded, i.e. a hold in a ship, by measuring the motion of the vertical conveyor relative to the crane, by measuring the motion of the horizontal conveyor relative to the vertical conveyor, and by measuring the motion of the stacking device relative to the horizontal conveyor.

The apparatus and procedure of the invention have the following advantages as compared to previously known techniques:
- The invention significantly reduces the number of workers needed.
- The invention reduces the number of dangerous situations arising in the loading work.
- The invention facilitates the supervision of the loading operations.
- The invention allows the loading order to be programmed in advance.
- The invention enables the loading capacity to be significantly increased.
- A loading scheme for the space to be loaded can even be made in advance if the dimensions of the space are known.
- The apparatus provides easy access to various data concerning e.g. a ship's capacity and the amounts of goods loaded.

In the following, the invention is described in detail by referring to the drawings attached, wherein:
Fig. 1 shows a diagram representing the loading operation.
Fig. 2 shows a diagram representing the apparatus of the invention.
Fig. 3 shows the stowing device of the invention in lateral view.
Fig. 4 shows the device of fig. 3 in top view.
Fig. 5 shows a diagram representing a section through the stacking device of the invention.
Fig. 6 shows a detail of the stacking device.

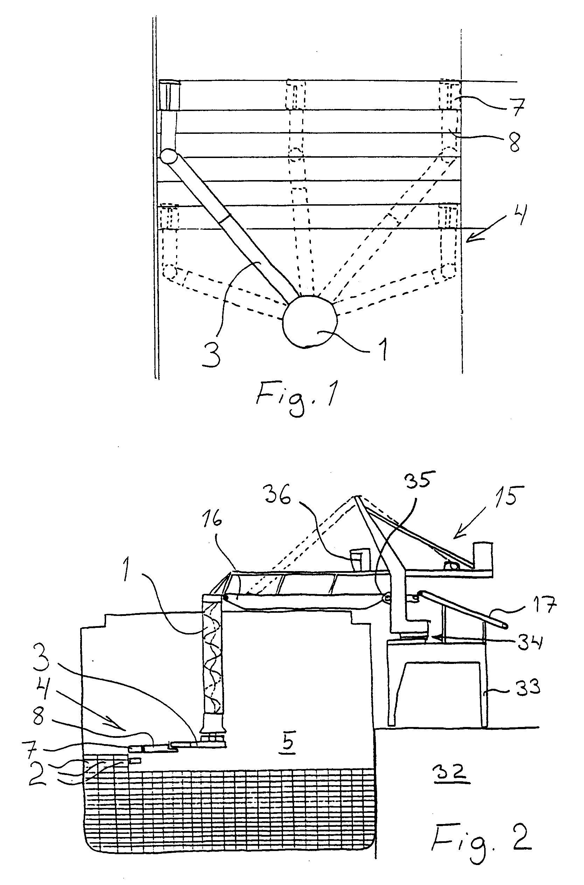

The diagram in fig. 1 illustrates the principle of the loading procedure of the invention. The vertical conveyor 1 supports an adjustable-length horizontal conveyor 3 mounted at its lower end. The horizontal conveyor supports a horizontally turnable auxiliary conveyor 8 mounted at its other end. A stacking device 7 is fixedly mounted at the other end of the auxiliary conveyor. The goods to be loaded, e.g. bags, slide down through the vertical conveyor 1 and further onto the conveyor belt of the horizontal conveyor 3, on which they move in succession one by one via the joint between the horizontal conveyor 3 and the auxiliary conveyor 8 onto the auxiliary conveyor 8, retaining their orientation relative to the conveying belt. From the auxiliary conveyor 8, the parcels move one after the other into the stacking device 7, which drops them one by one in certain places in the space to be loaded. The essential feature of the apparatus of the invention is that, by turning the horizontal conveyor 3 into different positions (five positions being shown) and by suitably adjusting its length, it is possible, using the stowing device 4 of the invention, to load a certain area of the space to be loaded without moving the vertical conveyor 1 and without changing the orientation of the stowing device 4 relative to the space to be loaded. In this way, the parcels to be loaded, e.g. rectangular bags, can be stacked in tight piles while keeping them parallel to each other without having to turn the bags at any stage during the loading or stacking operations.

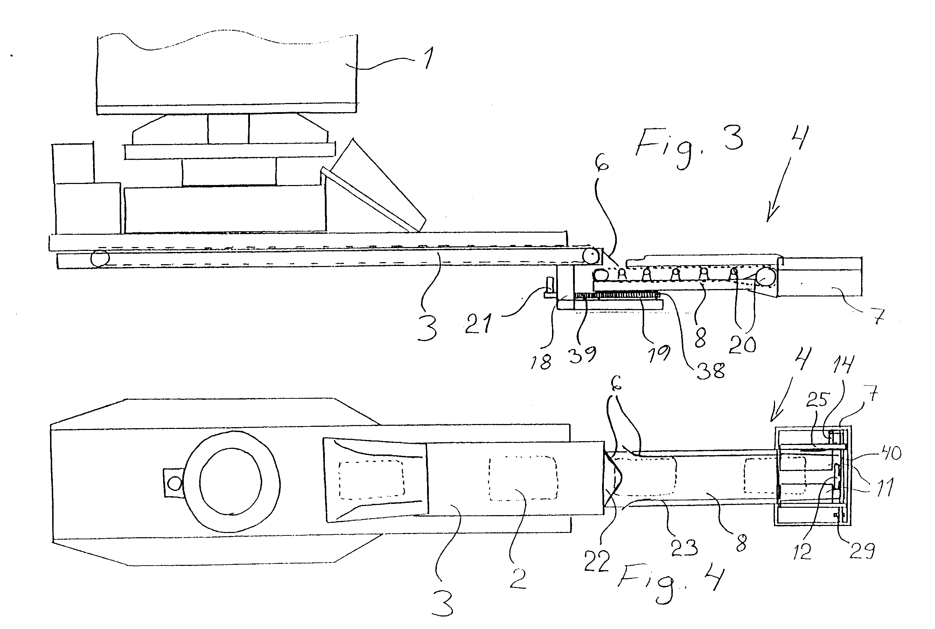

The diagram in fig. 2 represents the apparatus of the invention as a whole. Suspended at the end of the boom 16 of a quay crane 15 is a vertical spiral conveyor 1, along whose spiral track the bags 2 to be loaded slide down into a ship's cargo hold 5. The lower end of the vertical conveyor 1 supports a telescoping horizontal conveyor 3, which can be turned through 360° and supports at its other end an auxiliary conveyor 8 horizontally rotatable about a vertical axle. Mounted at the other end of the auxiliary conveyor 8 is a stacking device 7, through which the bags are dropped in place in the cargo hold 5 of the ship. An essential feature in the transfer of the goods to be loaded is that, e.g. when rectangular bags are being conveyed, they preserve a certain direction all the time, i.e. they move e.g. with one of their short sides first all the time while advancing through the transfer conveyor 17, crane booms 16, vertical conveyor 1, horizontal conveyor 3, auxiliary conveyor 8 and stacking device 7. The goods to be loaded are brought to the transfer conveyor 17 using procedures and equipment known in themselves, so these will not be described in this context.

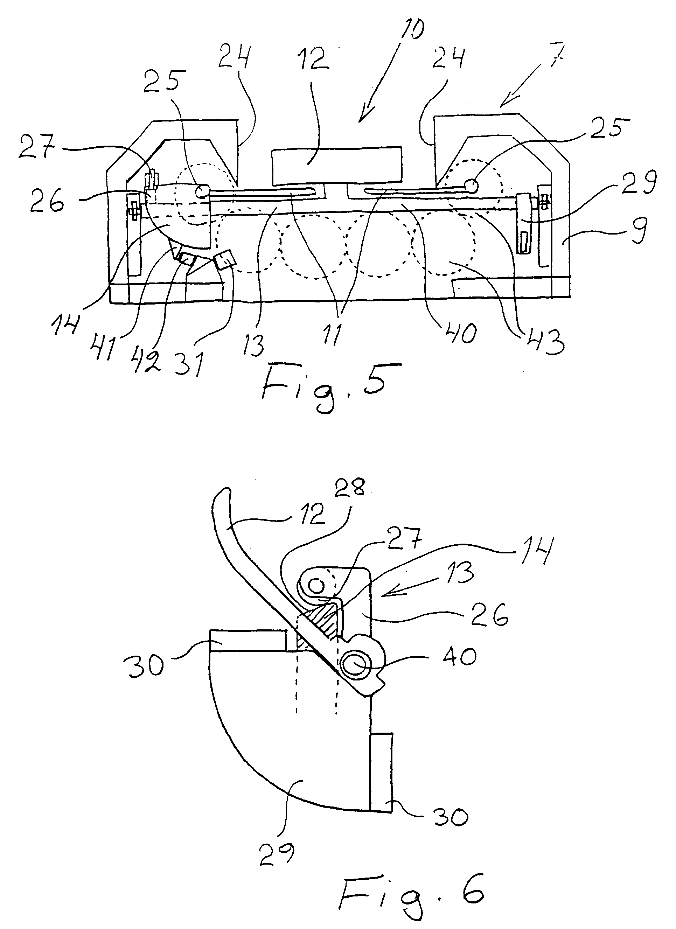

Figures 3 and 4 present a more detailed illustration of the stowing device 4 of the invention. Mounted at the end of the telescoping horizontal conveyor 3 is a bearing frame 18 which supports an auxiliary conveyor 8 resting on a swivel bearing 19 with a vertical axis. The auxiliary conveyor is a belt conveyor with a belt running around rollers 20 and with a stacking device 7 mounted at its other end, to be described in greater detail in connection with figs. 5 and 6.

Mounted on the bearing frame 18 is a power means 21 enabling the auxiliary conveyor 8 to be turned on its swivel bearing 19 horizontally relative to the bearing frame. The power transmission from the power means 21 to the swivel bearing 19 is implemented using a large-diameter gearwheel 38, to which the power is transmitted from the power means via a smaller gearwheel 39. A triangular guiding plate 22 with a downward slope is provided at the end of the horizontal conveyor 3, and the edges of the auxiliary conveyor are provided with vertical guiding walls 23 of a length essentially equal to that of the auxiliary conveyor, said guiding walls having an outward curvature at the end facing the horizontal conveyor 3. Thus, by virtue of the guiding plate and guiding walls, the parcels 2 to be loaded can be kept in the same orientation relative to the conveying belt both on conveyor 3 and conveyor 8 regardless of the angle between these conveyors. This angle may be up to nearly 90°.

Referring to fig. 5, the stacking device of the invention comprises a framework 9 having in its middle a feed space 10 which is open at the top and at the end facing the auxiliary conveyor, and which is limited at the rear edge by a platelike tripping device 12, at the sides by lateral guides 24 and at the bottom by openable supporting devices 11.

The supporting devices 11 consist of two doors mounted oppositely on the framework 9 by means of horizontal axles 25, said doors being additionally provided with a platelike counterweight 14 having the shape of a 90° sector, which is fixed to one of the axles 25 opposite to the door and whose weight applies to the axle 25 a torque exceeding the opposite torque resulting from the weight of the supporting devices 11 when unloaded, so that when no external forces are applied to the supporting devices 11, they remain in an essentially horizontal position, forming the bottom of the feed space 10.

The tripping device 12 forming the rear wall of the feed space 10 is connected to the supporting devices 11 by means of a lever mechanism 13 as follows. The tripping device 12 is pivoted on the framework 9 by means of a transverse horizontal shaft 40, and each end of the shaft is provided with a supporting arm 26 attached to the shaft. The arm is provided with a roller 27 rotatably mounted at its end. At the upper edge of the counterweight 14 is a stop face 28 slanting in a downward direction away from the supporting arm 26. This stop face receives the thrust of the roller 27 when the latter blocks the upward motion of the counterweight 14, i.e. prevents the supporting device 11 from turning downwards. Furthermore, the shaft 40 is provided with a platelike counterweight 29 corresponding to counterweight 14. As soon as the external force acting on the tripping device 12 is removed, counterweight 29 returns the tripping device 12 and the roller 27 fixedly connected to it to the position in which they interlock the supporting devices 11. In addition, both edges of the counterweight 29 of the tripping device 12 are provided with shock dampers 30, i.e. rubber bumpers designed to damp excessively fast and sudden movements of the lever mechanism at the extreme positions, which might prevent the supporting devices 11 from being locked in place. Similarly, the framework 9 is provided with shock dampers 31 which are placed below the feed space 10 and supporting devices 11 and designed to receive the thrust of the doors 11 as they open and to damp this opening motion so as to allow a quick and smooth return of the doors to the closed position. Moreover, counterweight 14 is provided with a cam 41, which, when the supporting devices 11 are in the horizontal position, rests against another shock damper 42 provided on the framework 9. Thus, the cam forms the other extreme limit of the motion of the supporting devices, preventing them from turning up beyond the horizontal position.

As the interlocking and tripping of the supporting devices 11 is implemented with a mechanism acting on only one of the axles 25, these are inter-linked with a forced-action transmission consisting of six gearwheels 43 in such a way that the axles 25 always turn simultaneously and through an equal angle but in opposite directions. Therefore, both doors 11 will open at exactly the same moment and the parcel falling down between them will go straight down, which could not be guaranteed if each door had its own interlocking and tripping mechanism. Naturally the supporting devices can be synchronized using some other construction, e.g. a cogged belt, chain or a suitable lever mechanism.

The stacking device 7 of the invention functions as follows. When the stacking device is in position above a desired stacking location, the auxiliary conveyor 8 brings the parcels 2 to be stacked into the feed space 10 of the stacking device one at a time. When a parcel enters the feed space, it will hit the tripping device 12 at the rear of the space, with the result that the supporting arm 26 fixedly connected to the tripping device will turn rearwards, causing the roller 27 mounted on it to roll off from the stop face 28, whereupon, due to the weight of the parcel, the supporting devices 11 will give way and be opened, permitting the parcel to fall down into the desired stacking location. Once the parcel has left the feed space 10, counterweight 14 will cause the supporting devices 11 to turn back into the horizontal position, and counterweight 29 will cause the tripping device 12 to return to its forward position, so that the roller 27 will also return into contact with the stop face 28 of counterweight 14, thus interlocking the supporting devices 11 in the horizontal position.

Referring to fig. 2, the location of the stacking device 7 relative to the space 5 to be loaded can be implemented by control equipment 36 continously measuring the following displacements, this term being used in the present application to refer to both horizontal travel, vertical lifting and lowering and turning or rotation: displacement of the portal 33 of the crane 15 relative to the quay 32, rotation of the upper part or boom system of the crane about joint 34 relative to the portal 33, vertical motion of the boom system 16 about joint 35, horizontal turning motion of the telescopic conveyor 3, longitudinal motion of the telescopic conveyor, and horizontal rotation of the auxiliary conveyor 8 relative to the telescopic conveyor. These measurements can be performed using any known techniques applicable, e.g. suitable pulse detectors, angle detectors or equivalent placed in appropriate locations for measuring the travel or motion in question.

## Claims

1. Apparatus for the loading of parcelled goods in the cargo hold of a ship, said apparatus comprising a first conveyor (1) for conveying the goods (2), at the end of the conveyor is supported a horizontally turnable and telescoping horizontal conveyor (3), and the end of the horizontal conveyor (3) pointing away from the first conveyor (1) being provided with a horizontally rotatable stowing device (4),
**characterized** in that
for the use in the cargo hold of a ship
- said first conveyor is a vertical conveyor (1) for conveying the goods (2) in a downward direction onto said horizontal conveyor (3) with their short sides first when rectangular goods are being conveyed,
- said horizontal conveyor (3) is turnable through 360° in the horizontal plane,
- that the horizontal conveyor (3) and/or the stowing device (4) are/is provided with guiding devices (6) placed between the horizontal conveyor (3) and the stowing device (4) for guiding the goods (2) so as to keep them in their given orientation as they move from the horizontal conveyor (3) to the stowing device (4),
- and that the apparatus is provided with control equipment (36) for maintaining a constant orientation of the stowing device (4) relative to the space (5) to be loaded.

2. Apparatus according to claim 1,
**characterized** in that
the means for shifting, lifting, lowering and turning the vertical conveyor (1), horizontal conveyor (3) and stowing device (4) as well as the associated locating detectors are connected to the control equipment (36) to enable the position of the stowing device (4) to be determined.

3. Procedure for the loading of parcelled goods, with
- using a first conveyor (1) at the end of which being supported a horizontally turnable and telescoping horizontal conveyor (3) and the end of the horizontal conveyor (3) pointing away from the first conveyor (1) being provided with a horizontally rotatable stowing device (4),
for conveying the goods in succession towards a place where they are to be stacked, and
- before the loading operation is started, the space (5) to be loaded being defined and the loading scheme being prepared, and
- the stowing device is moved in accordance with a loading scheme in step with the progress of the loading of the goods,
**characterized** in that
for the loading of parcelled goods in the cargo hold of a ship,
- using a vertical conveyor (1) supported by a crane (15) above the cargo hold, the goods (2) to be loaded are lowered in succession onto the horizontal conveyor (3) with their short sides first, when rectangular goods are being conveyed, and keeping their orientation as they move from the horizontal conveyor (3) to the stowing device, and
- the stowing device (4) maintaining a constant orientation relative to the space (5) to be loaded,
- whereas the horizontal conveyor (3) is turnable through 360°in the horizontal plane,
- and before the loading operation is started, the space (5) to be loaded being defined and the loading scheme being prepared, and
- the loading scheme is such that the need for shifting the position of the vertical conveyor (1) during the loading operation is minimized.

4. Procedure according to claim 3,
**characterized** in that
the shifting and location of the stowing device (4) relative to the space (5) to be loaded are performed by measuring the motion of the crane (15) relative to the space (5) to be loaded, the motion of the vertical conveyor (1) relative to the crane, the motion of the horizontal conveyor (3) relative to the vertical conveyor and the motion of the stowing device (4) relative to the horizontal conveyor.

5. Procedure according to claim 3 or 4,
**characterized** in that
the space (5) to be loaded is defined by driving the apparatus into the extreme and corner points of the space, and while in these positions, giving a signal to the control equipment e.g. by pressing a button.

## Patentansprüche

1. Vorrichtung zum Laden von Stückgütern in den Frachtraum eines Schiffes, wobei diese Vorrichtung einen ersten Förderer (1) zum Fördern der Güter (2) aufweist, das Ende des Förderers einen horizontal drehbaren und teleskopischen, horizontalen Förderer (3) trägt und das Ende des horizontalen Förderers (3), das von dem ersten Förderer (1) wegzeigt, mit einer horizontal drehbaren Stauvorrichtung (4) ausgerüstet ist,
**dadurch gekennzeichnet,** daß
zum Einsatz in dem Frachtraum eines Schiffes
- dieser erste Förderer ein vertikaler Förderer zum Befördern der Güter (2) in einer nach unten weisenden Richtung auf den genannten horizontalen Förderer (3) ist, wobei bei der Beförderung von rechteckigen Gütern deren kurze Seiten nach vorne zeigen,
- der horizontale Förderer (3) auf der Horizontalebene um 360° drehbar ist,
- der horizontale Förderer (3) und/oder die Stauvorrichtung (4) mit Führungsvorrichtungen (6) ausgestattet ist/sind, die sich zwischen dem horizontalen Förderer (3) und der Stauvorrichtung (4) befinden, um die Güter (2) zu führen und in ihrer gegebenen Ausrichtung zu halten, wenn sie sich von dem horizontalen Förderer (3) zur Stauvorrichtung (4) bewegen,
- und daß die Vorrichtung über Kontrollvorrichtungen (36) zum Halten der Stauvorrichtung (4) in konstanter Ausrichtung zu dem zu beladenden Raum (5) verfügt.

2. Vorrichtung nach Anspruch 1, dadurch gekennzeichnet, daß die Vorrichtungen zum Verschieben, Hochheben, Herablassen und Drehen des vertikalen Förderers (1), des horizontalen Förderers (3) und der Stauvorrichtung (4) sowie die angeschlossenen Lagesensoren mit den Kontrollvorrichtungen (36) verbunden sind, damit die Lage der Stauvorrichtung (4) bestimmt werden kann.

3. Verfahren zum Laden von Stückgütern, bei dem
- ein erster Förderer (1) verwendet wird, dessen Ende einen horizontal drehbaren und teleskopischen, horizontalen Förderer (3) trägt, wobei das Ende des horizontalen Förderers (3), das von dem ersten Förderer (1) wegzeigt, mit einer horizontal drehbaren Stauvorrichtung (4) ausgerüstet ist,
zum aufeinanderfolgenden Befördern der Güter zu einem Platz, an dem sie gestapelt werden sollen, und
- der zu beladende Raum (5) vor Beginn des Ladevorgangs definiert wird und ein Ladeschema erstellt wird, und
- die Stauvorrichtung abgestimmt auf ein Ladeschema im Einklang mit dem Voranschreiten der Ladung der Güter bewegt wird,
**dadurch gekennzeichnet,** daß
zum Laden von Stückgütern in den Frachtraum eines Schiffes
- ein von einem Kran (15) über dem Frachtraum getragener, vertikaler Förderer (1) eingesetzt wird, die zu fördernden Güter (2) mit - bei Beförderung rechteckiger Güter - den kurzen Seiten zuvorderst nacheinander auf den horizontalen Förderer (3) herabgelassen werden und deren Ausrichtung beim Transport von dem horizontalen Förderer (3) zu der Stauvorrichtung beibehalten wird, und
- die Stauvorrichtung (4) eine konstante Ausrichtung zu dem Laderaum (5) behält,
- während der horizontale Förderer (3) auf der Horizontalebene um 360° drehbar ist,
- und der Raum (5) vor dem Beginn des Ladevorgangs definiert und das Ladeschema erstellt wird, und
- das Ladeschema so ausgearbeitet ist, daß der vertikale Förderer (1) während des Ladevorgangs so wenig wie möglich verschoben werden muß.

4. Verfahren nach Anspruch 3, dadurch gekennzeichnet, daß das Verschieben und Positionieren der Stauvorrichtung (4) zu dem zu beladenden Raum (5) durch Messen der Bewegung des Krans (15) zu dem Laderaum (5), der Bewegung des vertikalen Förderers (1) zum Kran, der Bewegung des horizontalen Förderers (3) zum vertikalen Förderer und der Bewegung der Stauvorrichtung (4) zum horizontalen Förderer erfolgen.

5. Verfahren nach Anspruch 3 oder 4, dadurch gekennzeichnet, daß der Laderaum (5) dadurch definiert wird, daß die Vorrichtung in die äußeren und Eckpunkte des Raums bewegt wird und aus diesen Positionen heraus ein Signal an die Kontrollvorrichtungen gibt, beispielsweise durch Drücken einer Taste.

## Revendications

1. Appareil pour le chargement d'articles dans la cale d'un navire, ledit appareil comprenant un premier convoyeur (1) pour transporter les articles (2), un convoyeur horizontal télescopique et horizontalement pivotant (3) supporté à l'extrémité du premier convoyeur, et un dispositif de rangement horizontalement tournant (4) monté à l'extrémité du convoyeur horizontal (3) à l'opposé du premier convoyeur (1),
caractérisé en ce que, pour l'utilisation dans la cale d'un navire :
ledit premier convoyeur est un convoyeur vertical (1) pour transporter les articles (2) vers le bas, jusque sur ledit convoyeur horizontal (3), d'une manière telle que, dans le cas du transport d'articles rectangulaires, leurs petits côtés viennent en premier,
ledit convoyeur horizontal (3) peut tourner de 360° dans le plan horizontal,
le convoyeur horizontal (3) ou le dispositif de rangement (4) ou les deux comportent des dispositifs de guidage (6) placés entre le convoyeur horizontal (3) et le dispositif de rangement (4) pour guider les articles (2) de manière à les maintenir dans leur orientation donnée lorsqu'ils passent du convoyeur horizontal (3) au dispositif de rangement (4), et
l'appareil comprend un équipement de commande (36) pour maintenir une orientation constante du dispositif de rangement (4) par rapport à l'espace (5) à charger.

2. Appareil suivant la revendication 1,
caractérisé en ce que :
les moyens de translation, montée, descente et rotation du convoyeur vertical (1), du convoyeur horizontal (3) et du dispositif de rangement (4), ainsi que les détecteurs de position associés , sont connectés à l'équipement de commande (36) pour permettre de déterminer la position du dispositif de rangement (4).

3. Méthode de chargement d'articles, au moyen d'un premier convoyeur (1) à l'extrémité duquel est supporté un convoyeur horizontal télescopique et horizontalement pivotant (3), et l'extrémité du convoyeur horizontal (3) située à l'opposé du premier convoyeur (1) portant un dispositif de rangement horizontalement pivotant (4), pour transporter les articles les uns à la suite des autres vers un endroit où on peut les empiler et, avant le début de l'opération de chargement, on définit l' espace (5) à charger et on prépare le principe de chargement, et on déplace le dispositif de rangement par étapes conformément à un principe de chargement, au fur et à mesure de la progression du chargement des articles,
caractérisée en ce que, pour le chargement d'articles dans la cale d'un navire :
au moyen d'un convoyeur vertical (1) supporté par une grue (15) au-dessus de la cale du navire, les articles (2) à charger sont descendus les uns après les autres sur le convoyeur horizontal (3) avec leurs petits côtés en premier lorsqu'on transporte des articles rectangulaires, et ils conservent leur orientation lorsqu'ils passent du convoyeur horizontal (3) au dispositif de rangement,
le dispositif de rangement (4) conserve une orientation constante par rapport à l'espace (5) à charger, tandis que le convoyeur horizontal (3) peut pivoter sur 360° dans le plan horizontal,
avant le début de l'opération de chargement, on définit l'espace (5) à charger et on prépare le schéma de chargement, et
le schéma de chargement est tel qu'on minimise la nécessité de changer la position du convoyeur vertical (1) pendant l'opération de chargement.

4. Méthode suivant la revendication 3,
caractérisée en ce que
le déplacement et le positionnement du dispositif de rangement (4) par rapport à l'espace (5) à charger sont effectués par mesure du déplacement de la grue (15) par rapport à l'espace (5) à charger, du déplacement du convoyeur vertical (1) par rapport à la grue, du déplacement du convoyeur horizontal (3) par rapport au convoyeur vertical, et du déplacement du dispositif de rangement (4) par rapport au convoyeur horizontal.

5. Méthode suivant la revendication 3 ou 4,
caractérisée en ce que
on définit l'espace (5) à charger, par amenée de l'appareil aux points extrêmes et aux angles de l'espace et, pendant qu'il est dans ces positions, par fourniture d'un signal à l'équipement de commande, par exemple par pression sur un bouton.
